# EUROPEAN PATENT APPLICATION

(11) **EP 2 896 538 A1**
(43) Date of publication of application: **22.07.2015**
(21) Application number: 15151056.7
(22) Date of filing: 14.01.2015
(51) Int. Cl.: B60T 8/36, B60T 8/50, B60T 13/16, B60T 13/14

(54) **Proportional valve associable with a control device, particularly with the pump-brake of a vehicle**

(30) Priority: 17.01.2014 IT MO20140008
(71) Applicant: Studio Tecnico 6 M S.R.L., 41123 Modena (IT)
(72) Inventor: Mamei, Eronne, 41123 Modena (IT); Mamei, Enrico, 41123 Modena (IT); Mamei, Andrea, 41123 Modena (IT)
(74) Representative: Zoli, Filippo

(57) **Abstract**

The proportional valve (3) associable with a control device comprises:
- a body (5) inside which is housed sliding a cursor (10) having at least a third gap (13) communicating with a thrust chamber (9) acting on the operating piston (4) of a control device of a vehicle;
- at least a spool (15) fitted sliding inside the cursor (10) and in which is defined at least a flow channel (18) of the work fluid communicating with a first chamber (19) which acts on a first portion (15a) of the spool itself, the relative displacement of the cursor (10) and of the spool (15) being able at least to place in communication the third gap (13) with one of a supply line (6) and a drain line (7);
- at least a thrust element (20) associable with the braking pedal (P) of the vehicle, the displacement of the thrust element (20) towards a configuration of braking causing the relative displacement of the cursor (10) and of the spool (15) to allow the inlet of the work fluid in the thrust chamber (9) passing through the third gap (13);
where the proportional valve (3) also comprises elastic means (21) acting on the spool (15) on the opposite side of the first chamber (19) and at least a locator element (22) able to press the elastic means (21) following the displacement of the thrust element (20) towards the configuration of braking to increase the force applied by the same on the spool (15).

## Description

The present invention relates to a proportional valve associable with a control device, particularly with the pump-brake of a vehicle.

In the braking devices known so far, servo brake devices are generally used to increase the braking force applied by the driver by means of the brake pedal.

A servo brake device of known type has a spool which is accommodated movable inside the braking piston of the pump-brake, on which are formed a first gap communicating with a source of a pressurized fluid, a second gap of the work fluid and a third gap communicating with a thrust chamber acting on the same braking piston. The spool mentioned above, on which a channel is defined for the flow of the work fluid, is movable between a drain position, wherein the third gap is placed in communication with the second gap, and a piloting position, wherein the third gap is placed in communication with the first gap.

On the spool the pressure operates on one side which is present in the service channel, and therefore in the thrust chamber, together with a helical spring, and on the opposite side a thrust element operates mechanically, which is integrally associated with the spool itself, and connectable to a braking pedal of the vehicle.

These proportional valves of known type have several drawbacks.

In particular, the proportional valves of known type do not allow to adjust the pressure in the thrust chamber irrespective of the thrust of the braking pedal. This makes the valves of known type not very versatile to use, since they do not allow to adjust the piloting pressure to the correct useful value required by the specific application.

Generally, to avoid this drawback, pressure relief valves are used, which have an additional cost and increase the construction complexity of the valve itself. Another drawback of the valves of known type consists in the fact that, even when piloting pressure is maximum, the braking pedal can carry out anyway an apparently defective extra stroke to increase the braking pressure.

The main aim of the present invention is to provide a proportional valve associable with the pump-brake of a vehicle which allows to overcome the drawbacks of the prior art.

Within this aim, one object of the present invention is to provide a valve which allows to adjust the piloting pressure of the pump-brake's piston depending on the specific requirements and without any additional valves.

Another object of the present invention is to prevent the braking pedal from carrying out an extra stroke in the operating condition in which the piloting pressure is maximum.

Another object of the present invention is to provide a proportional valve associable with the pump-brake of a vehicle which allows to overcome the mentioned drawbacks of the prior art within the ambit of a simple, rational, easy and effective to use as well as low cost solution.

The aforementioned objects are achieved by the present proportional valve associable with a control device, particularly with the pump-brake of a vehicle, comprising:
- a body inside which is housed sliding a cursor having at least a first gap communicating with a supply line of a pressurized fluid, at least a second gap communicating with a drain line and at least a third gap communicating with a piloting line, where the latter communicates in turn with a thrust chamber acting on the operating piston of a control device;
- at least a spool fitted sliding inside said cursor and in which is defined at least a flow channel of the work fluid communicating with a first chamber which acts on a first portion of the spool itself and having at least a connection gap facing on its outer surface, the relative displacement of said cursor and of said spool being able at least to place in communication said third gap with one of said first gap and said second gap by means of said connection gap;
- at least a thrust element associable with the braking pedal of the vehicle and moving between an idle configuration and a configuration of maximum braking, the displacement of said thrust element towards the configuration of maximum braking causing the relative displacement of said cursor and of said spool to allow the inlet of the work fluid in said thrust chamber passing through said third gap;
characterized by the fact that it comprises elastic means acting on a second portion of said spool arranged opposite said first portion and at least a locator element able to press said elastic means following the displacement of said thrust element towards the configuration of maximum braking to increase the force applied by the same on said spool.

Other characteristics and advantages of the present invention will become better evident from the description of a preferred, but not exclusive embodiment of a proportional valve associable with the pump-brake of a vehicle, illustrated by way of an indicative, but not limitative example in the accompanying drawings wherein:
Figure 1 is a longitudinal sectional view of a valve according to the invention in a first embodiment and in a first operating configuration;
Figure 2 is a longitudinal sectional view of the valve of Figure 1 in a second operating configuration;
Figure 3 is a longitudinal sectional view of the valve of Figure 1 in a third operating configuration;
Figure 4 is a cross-sectional view of the valve of Figure 1;
Figure 5 is a longitudinal sectional view of a valve according to the invention in a second embodiment.

With particular reference to these illustrations, globally indicated with reference number 1 is a servo brake assembly comprising a control device 2, such as a pump-brake, and a proportional valve 3.

As the expert in the field knows, the control device 2 comprises an operating piston 4 movable between an idle configuration and at least a braking configuration wherein it conveys a pressurized fluid to the braking circuit (not shown in the illustrations) of the relative vehicle.

In the event of the control device 2 being made up of a pump-brake, the operating piston 4 can act on or be the piston of the pump-brake.

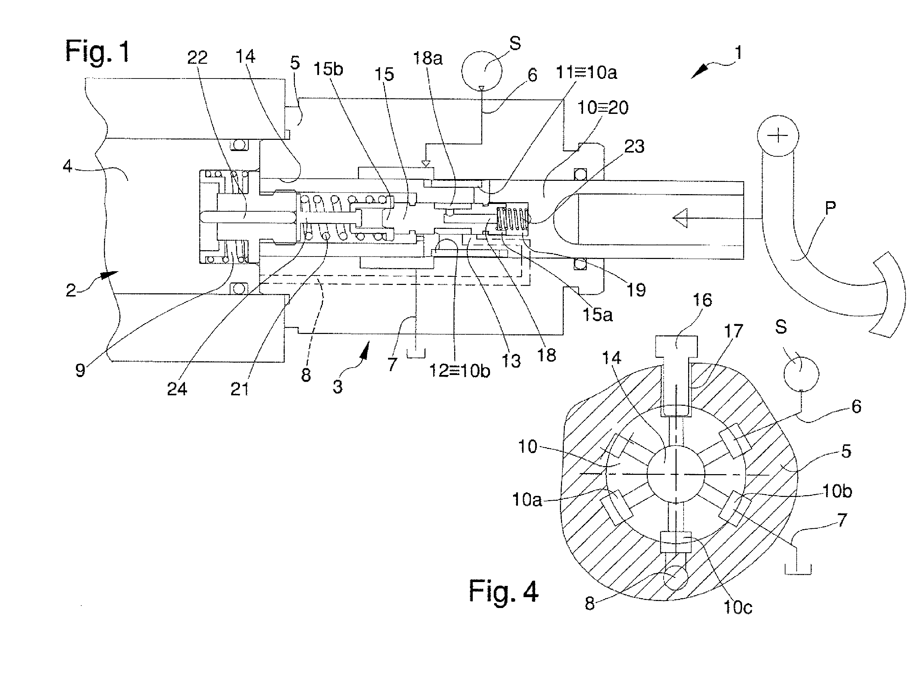

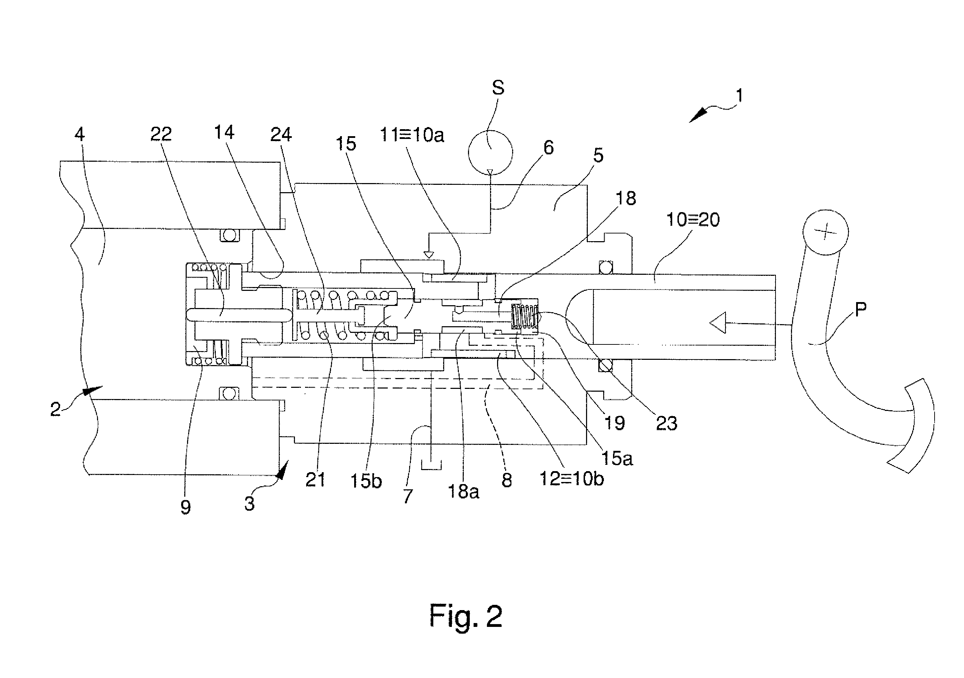

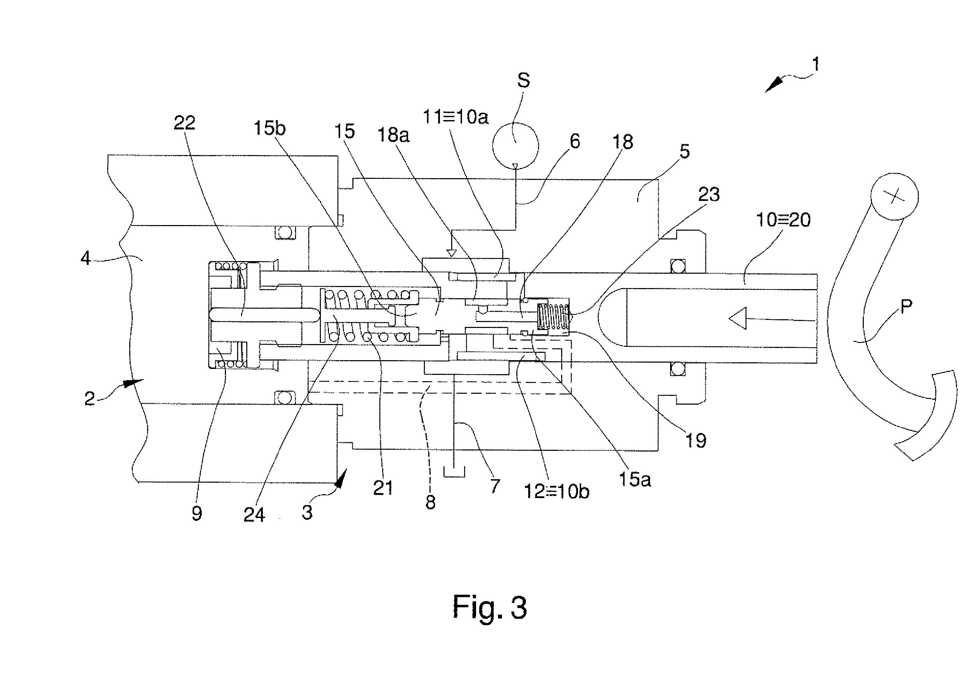

The proportional valve 3 comprises a body 5 inside which a cursor 10 is housed sliding having at least a first gap 11 communicating with a supply line 6 of a pressurized work fluid, at least a second gap 12 communicating with a drain line 7 and at least a third gap 13 communicating with a piloting line 8, the latter communicating in turn with a thrust chamber 9 acting on the operating piston 4. More in detail, in the first embodiment shown in Figures 1 to 3, the supply line 6, connected to a source S of the pressurized work fluid, the drain line 7 and the piloting line 8 are defined in the body 5.

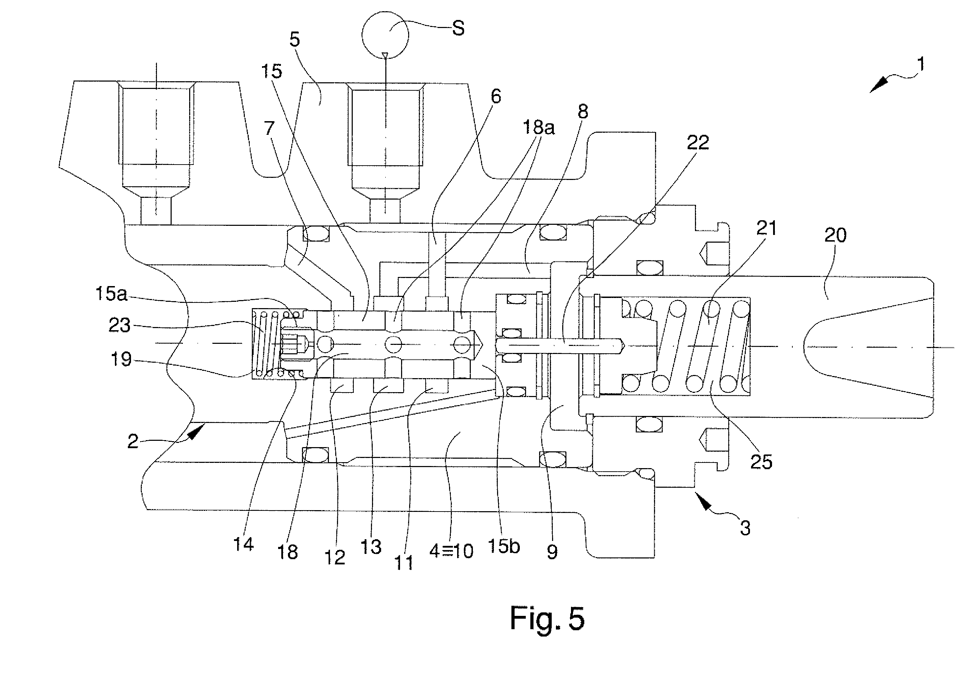

In the second embodiment shown in figure 5, on the other hand, the supply line 6 and the drain line 7 are partly defined in the body 5 and partly in the cursor 10, while the piloting line 8 is completely defined in the cursor 10.

As visible from Figure 4, in the first embodiment shown in Figures 1 to 3, the cursor 10 has a substantially circular section and has a plurality of grooves, of which at least a first groove 10a, at least a second groove 10b and at least a third groove 10c, staggered angularly the one with respect to the other and communicating, on one side, with a seat 14 formed inside the cursor itself and wherein a spool 15 is housed and, on the opposite side, with the supply line 6, with the drain line 7 and with the piloting line 8, respectively. In this first embodiment, therefore the first groove 10a coincides with the first gap 11 and the second groove 10b coincides with the second gap 12.

Preferably, the cursor 10 has at least three pairs of grooves 10a, 10b and 10c, where the grooves of each of these pairs are positioned on diametrically opposite sides of the cursor itself.

Advantageously, there is also a rotation stop element 16 of the cursor 10 with respect to the body 5, such as e.g. a guide element fitted in a relative seat 17 defined on the body itself and in one of the third grooves 10c. This stop element 16 therefore prevents the body 5 and the cursor 10 from rotating reciprocally, so that the grooves 10a, 10b and 10c communicate respectively with the supply line 6, with the drain line 7 and with the piloting line 8, irrespective of the longitudinal position of the cursor 10 with respect to the body 5.

As already anticipated above, the proportional valve 3 then comprises at least a spool 15 fitted sliding inside the seat 14 formed in the cursor 10 and wherein is defined at least a flow channel 18 of the work fluid communicating with a first chamber 19 acting on a first portion 15a of the spool itself and having at least a connection gap 18a facing on its outer surface. The first chamber 19 is therefore defined inside the seat 14 and is positioned between the first portion 15a of the spool 15 and the cursor 10.

The relative displacement of the cursor 10 and of the spool 15 is able at least to place the third gap 13 in communication with at least one of the first gap 11 and the second gap 12 by means of the connection gap 18a. In the event of the proportional valve 3 being of the closed center type, it has a steady position wherein the third gap 13 is closed and, therefore, not in communication either with the first gap 11 or with the second gap 12.

More particularly, the spool 15 is movable between an idle configuration, wherein it places the third gap 13 in communication with the second gap 12, so that inside the thrust chamber 9 the work fluid does not apply any pressure on the operating piston 4, and at least a piloting configuration, wherein it places the third gap 13 in communication with the first gap 11, so that the thrust chamber 9 is in turn placed in communication with the source S of the pressurized work fluid.

The proportional valve 3 further comprises at least a thrust element 20 associable with the braking pedal P of the vehicle and movable between an idle configuration and a configuration of maximum braking, passing through a plurality of intermediate configurations, where the displacement of the thrust element 20 towards the configuration of maximum braking causes the relative displacement of the cursor 10 and of the spool 15 to allow the inlet of the work fluid in the thrust chamber 9 passing through said third gap 13. It should be noticed that the configuration of maximum braking is variable depending on the stroke of the braking pedal P.

According to the invention, the proportional valve 3 comprises elastic means 21 acting on a second portion 15b of the spool 15 arranged opposite the first portion 15a and at least a locator element 22 able to press the elastic means 21 following the displacement of the thrust element 20 towards the configuration of maximum braking to increase the force applied by the same on the spool 15. The elastic means 21 therefore apply a force on the second portion 15b of the spool 15 able to push the latter towards the piloting configuration and in contrast with the force applied by the work fluid which enters the first chamber 19 and which acts on the first portion 15a of the spool itself.

Advantageously, inside the first chamber 19 further elastic means 23 are arranged, which also act on the first portion 15a in contrast to the elastic means 21.

As shown in Figures 1 to 3 and 5, the thrust chamber 9 is placed between the operating piston 4 and the thrust element 20. The locator element 22 has at least a portion facing the inside of the thrust chamber 9.

Preferably, the locator element 22 is made up of a pin having a substantially (unless of machining tolerances) circular section, as well as the spool 15, and the diameter of such pin 22 is smaller than that of the spool itself so that the force due to the pressure of the work fluid in the thrust chamber 9 is negligible. Conveniently, the locator element 22 is mobile in translation with respect to the thrust element 20.

More particularly, following the operation of the braking pedal, the thrust element 20 moves closer to the operating piston 4 and the locator element 22 operates on the elastic means 21, by pressing them.

The maximum stroke of the thrust element 20 is predefined and, consequently, also is the maximum compression of the elastic means 21. It follows, therefore, that the maximum force applicable by the elastic means 21 on the spool 15 is also predefined.

In the first embodiment shown in Figures 1 to 3, the cursor 10 is defined by the thrust element 20.

More in detail, in this first embodiment, the locator element 22 has an extremity resting against the operating piston 4 and the opposite extremity which acts, through a guide element 24, on the elastic means 21, the latter being positioned between the spool 15 and the locator element itself.

As visible from the illustrations, the seat 14 formed in the thrust element 20 has a first section inside which the spool 15 is housed and a second section inside which the elastic means 21 are housed, the first section having a larger diameter than the second section.

In the second embodiment shown in Figure 5, the cursor 10 is defined by the operating piston 4.

In this second embodiment, the locator element 22 is placed between the elastic means 21 and the spool 15.

Preferably, the elastic means 21 are contained inside a seat 25 formed in the thrust element 20.

The operation of this invention is as follows.

Until the braking pedal is operated by the operator, the spool 15 remains in its idle configuration, wherein it places the third gap 13 in communication with the second gap 12 so that the pressure in the thrust chamber 9 is substantially zero. Following the operation of the braking pedal, the thrust element 20 moves closer to the operating piston 4, causing the relative displacement of the locator element 22 which acts on the elastic means 21, by pressing them.

More in detail, in the first embodiment following the displacement of the thrust element 20, the locator element 22 moves closer to the spool 15 by pressing the elastic means 21, which apply a force on the spool itself and move it to a piloting configuration. In this operating configuration, the spool 15 therefore places the third gap 13 in communication with the first gap 11, so that the pressurized fluid reaches the thrust chamber 9.

At the same time, the pressurized fluid also enters the first chamber 19 through which it acts on the first portion 15a of the spool 15 in contrast to the force applied on the opposite side by the elastic means 21.

A similar operation also occurs in the second embodiment, where the displacement of the thrust element 20 towards the operating piston 4 causes the displacement of the spool 15 towards a piloting configuration due to the thrust applied on the spool itself by the elastic means 21 through the locator element 22 interposed between them.

In both embodiments, the configuration of maximum braking occurs when the thrust element 20 reaches the end-of-stroke position, i.e. it rests against the operating piston 4, corresponding to the maximum compression of the elastic means 21 and, therefore, the maximum force applicable by the same on the spool 15.

The piloting pressure is therefore limited by the force applicable by the elastic means 21, the maximum compression of which is constrained by the maximum stroke the locator element 22 can carry out, and by the further elastic means 23 on the spool 15.

It follows, therefore, that the spool 15 is self-balanced between the force applied by the elastic means 21 and 23 and the pressure in the thrust chamber 9.

In other words, the spool 15 moves alternatively between the piloting configuration and the idle configuration in order to keep the pressure in the thrust chamber 9 substantially constant.

It has in practice been ascertained how the described invention achieves the proposed objects and in particular the fact is underlined that the valve making the subject of the present invention allows to limit the piloting pressure of the pump-brake's piston, irrespective of the value of the supply pressure. Moreover, since in the configuration of maximum braking the thrust element rests against the pump-brake's piston, the valve according to the invention also prevents, in this operating configuration, the brake pedal from carrying out an extra stroke.

## Claims

1. Proportional valve (3) associable with a control device, particularly with the pump-brake (2) of a vehicle, comprising:
- a body (5) inside which is housed sliding a cursor (10) having at least a first gap (11) communicating with a supply line (6) of a pressurized fluid, at least a second gap (12) communicating with a drain line (7) and at least a third gap (13) communicating with a piloting line (8), where the latter communicates in turn with a thrust chamber (9) acting on the operating piston (4) of a control device;
- at least a spool (15) fitted sliding inside said cursor (10) and in which is defined at least a flow channel (18) of the work fluid communicating with a first chamber (19) which acts on a first portion (15a) of the spool itself and having at least a connection gap (18a) facing on its outer surface, the relative displacement of said cursor (10) and of said spool (15) being able at least to place in communication said third gap (13) with one of said first gap (11) and said second gap (12) by means of said connection gap (18a);
- at least a thrust element (20) associable with the braking pedal (P) of the vehicle and moving between an idle configuration and a configuration of maximum braking, the displacement of said thrust element (20) towards the configuration of maximum braking causing the relative displacement of said cursor (10) and of said spool (15) to allow the inlet of the work fluid in said thrust chamber (9) passing through said third gap (13);
**characterized by** the fact that it comprises elastic means (21) acting on a second portion (15b) of said spool (15) arranged opposite said first portion (15a) and at least a locator element (22) able to press said elastic means (21) following the displacement of said thrust element (20) towards the configuration of maximum braking to increase the force applied by the same on said spool (15).

2. Valve (3) according to claim 1, **characterized by** the fact that it comprises further elastic means (23) arranged inside said first chamber (19) and acting on said first portion (15a) in contrast to said elastic means (21).

3. Valve (3) according to claim 1 or 2, **characterized by** the fact that said thrust chamber (9) is placed between said operating piston (4) and said thrust element (20) and by the fact that said locator element (22) has at least a portion which faces inside said thrust chamber (9).

4. Valve (3) according to one or more of the preceding claims, **characterized by** the fact that said locator element (22) and said spool (15) have a substantially circular section, the diameter of said locator element (22) being smaller than that of said spool (15).

5. Valve (3) according to one or more of the preceding claims, **characterized by** the fact that said locator element (22) is mobile in translation with respect to said thrust element (20).

6. Valve (3) according to one or more of the preceding claims, **characterized by** the fact that said thrust element (20) has a predefined maximum stroke, the latter defining the maximum compression of said elastic means (21).

7. Valve (3) according to one or more of the preceding claims, **characterized by** the fact that said cursor (10) is defined by said thrust element (20).

8. Valve (3) according to claim 7, **characterized by** the fact that said thrust element (20) has a substantially circular section and has at least three grooves (10a, 10b, 10c) staggered angularly the one with respect to the other and communicating on one side with the seat (14) where said spool (15) is housed and on the opposite side with said supply line (6), with said drain line (7) and with said piloting line (8), respectively.

9. Valve (3) according to claim 8, **characterized by** the fact that it comprises a rotation stop element (16) of said thrust element (20) with respect to said body (5), said grooves (10a, 10b, 10c) communicating with said supply line (6), with said drain line (7) and with said piloting line (8) irrespective of the longitudinal position of said thrust element (20) with respect to said body (5).

10. Valve (3) according to one or more of the preceding claims, **characterized by** the fact that said locator element (22) has an extremity resting against said operating piston (4) during the displacement of said thrust element (20) towards the configuration of maximum braking and by the fact that said elastic means (21) are placed between said spool (15) and said locator element (22), the latter pressing the elastic means themselves following the displacement of said thrust element (20) towards the configuration of maximum braking.

11. Valve (3) according to one or more of the claims from 1 to 6, **characterized by** the fact that said cursor (10) is defined by said operating piston (4).

12. Valve (3) according to claim 11, **characterized by** the fact that said locator element (22) is placed between said elastic means (21) and said spool (15).

13. Valve (3) according to claim 11 or 12, **characterized by** the fact that said elastic means (21) are contained inside said thrust element (20).
